# EUROPEAN PATENT SPECIFICATION

(11) **EP 3 034 381 B1**
(45) Date of publication and mention of the grant of the patent: **15.11.2017**
(21) Application number: 15200595.5
(22) Date of filing: 16.12.2015
(51) Int. Cl.: B62D 25/20, B62D 33/06, B60N 2/015, B60N 2/42, B62D 21/15

(54) **ANCHORING SYSTEM FOR A SEAT OF AN INDUSTRIAL OR COMMERCIAL VEHICLE**
VERANKERUNGSSYSTEM FÜR EINEN SITZ EINES INDUSTRIE- ODER NUTZFAHRZEUGS
SYSTÈME D'ANCRAGE POUR UN SIÈGE D'UN VÉHICULE INDUSTRIEL OU COMMERCIAL

(30) Priority: 16.12.2014 IT TO20141051
(43) Date of publication of application: 22.06.2016
(73) Proprietor: IVECO S.p.A., 10156 Torino (IT)
(72) Inventor: CALAON, Ivan, 10125 TORINO (IT); BIANCHI, Pietro, 10129 TORINO (IT)
(74) Representative: Franzolin, Luigi

(56) References cited:
- DE-A1-102009 048 335
- DE-A1-102010 021 087
- DE-T2- 69 400 180
- US-A1- 2003 137 163
- US-B1- 6 182 411

## Description

### Sphere of application of the invention

The present invention relates to the field of passive safety of industrial or commercial vehicles and in particular refers to an anchoring system for a seat.

### Prior art

The cabs of industrial and commercial vehicles are geometrically configured so that the driver is very close to the perimeter of said cab, therefore, in the event of frontal impact, the driver is likely to be dramatically involved in the accident. The DE 10 2009 048335 discloses such an anchoring system for seats of an industrial vehicle.

### Summary of the invention

Consequently the aim of the present invention is to propose an anchoring system for a seat of an industrial or commercial vehicle which makes it possible to offer better passive protection of the driver and possibly, of a passenger.

The basic idea of the present invention is to divide the floor of the vehicle cab into longitudinal strips, connected and contiguous to each other, and to increase the longitudinal yielding to frontal impact of a relative industrial or commercial vehicle, of one or more of said longitudinal strips of the cab floor. A strip of reduced stiffness is therefore placed alongside a strip of greater stiffness. These are substantially alternated with respect to a transverse extension of the floor. A first point of a seat is attached to a strip of reduced stiffness, while a second point is attached to a floor strip having a greater longitudinal stiffness. In the event of a frontal impact, the longitudinal strip of reduced stiffness slides back with respect to the adjacent strip of greater stiffness. This causes a rotation of the seat in unison with the rearward movement of the strip of reduced stiffness of the cab floor. This makes it possible to face the occupant of the seat towards the inside or the door of the cab, providing more space for the occupant of the seat: driver and/or passenger.

The object of the present invention is an anchoring system or a seat of an industrial or commercial vehicle according to claim 1.

Another object of the present invention is a commercial or industrial vehicle comprising the aforesaid anchoring system.

The claims describe preferred variants of the invention, forming an integral part of the present description.

### Brief description of the figures

Further purposes and advantages of the present invention will be clear from the detailed description below of an example of embodiment thereof (and of its variants) and the appended drawings provided merely by way of a non-limiting example, wherein:
Figure 1 schematically shows the anchoring system of the present invention in a normal condition of use of the vehicle, while
Figure 2 schematically shows the same anchoring system when subjected to frontal impact of the vehicle.
Identical reference numerals and letters in the drawings refer to the same elements or components.
In the present description the term "second" component does not imply the presence of a "first" component. These terms are in fact used only for clarity and are not intended as limiting.

### Detailed description of embodiments

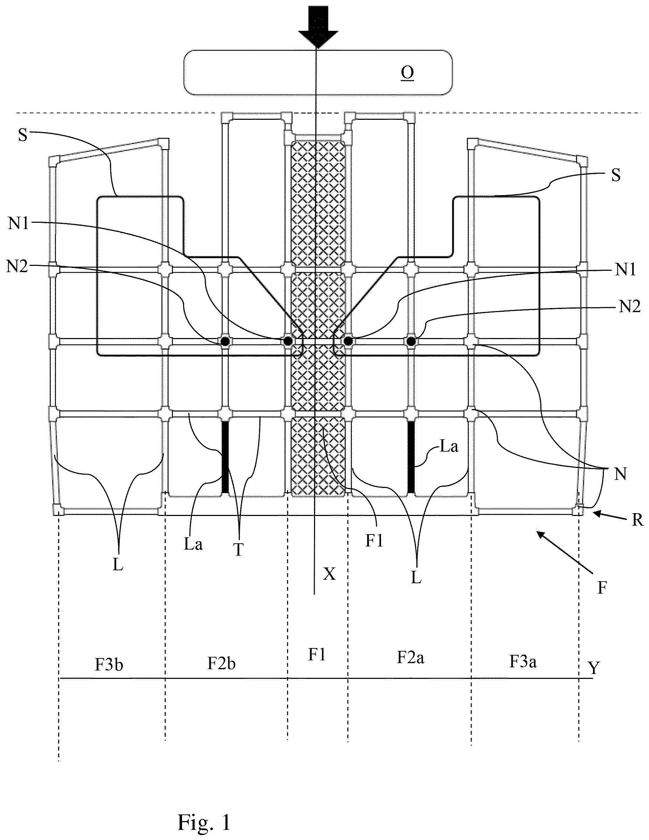

According to a preferred variant of the present invention, shown in Figure 1, the floor F of the vehicle cab of an industrial or commercial vehicle consists of a plurality of longitudinal L and transversal T rods connected by nodes N to form a reticulate structure. Said rods are "longitudinal" or "transverse" according to the vehicle's longitudinal extension axis X.

The floor F of the cab gives a clear idea of the plan view of a vehicle cab.

Figure 1 also shows an obstacle O distanced from the floor F.

According to the variant of Figure 1, a central, longitudinal strip (or portion) F1 is particularly robust and resistant to a collision of the vehicle against an obstacle O.

To give a better understanding of the division into longitudinal strips of the floor of the vehicle cab, just below figure 1 a Y axis transverse to the longitudinal axis X is shown, identifying the central strip, the intermediate strips F2a and F2b and the peripheral strips F3a and F3b. The peripheral strips are entirely optional.

The floor F also identifies a rear edge R, which during a frontal impact, generally remains unchanged.

According to the variant of Figure 1, the intermediate strips F2a and F2b have decreased mechanical strength, i.e. they tend to deform more easily than the other strips and to slide rearwards in the event of a frontal impact with an obstacle O.

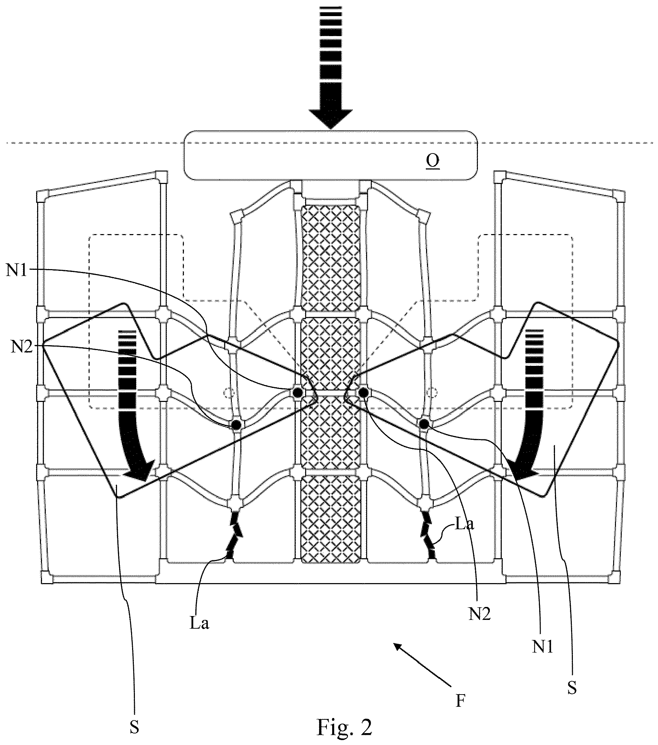

Figure 2 shows the results of a frontal impact of the vehicle with an obstacle O.

According to the present invention at least the driver's seat is supported by a support element S represented by means of an L-shaped outline. It may also be a different shape. The support may be a separate element from the seat or an element in one piece with the vehicle seat. Thus, for convenience, reference may be made below to the element "S" referring to both the seat or to the relative support element only, said difference being irrelevant for the purposes of comprehension.

Said support element is connected to the floor F of the vehicle cab at two points N1 and N2.

The first point N1 is attached, preferably, to a point of the central longitudinal strip F1, while the second point N2 is fixed to an intermediate strip F2a or F2b.

In the event of a frontal impact, as shown in Figure 2, the support element S undergoes a rotation due to the yielding of the intermediate strip F2a or F2b to which it is fixed, therefore, the relative seat faces towards the relative cab door, where there is more space.

As shown in the figures it is preferable that the central strip F1 is that of greatest strength in that it projects over the engine compartment of the vehicle, which notoriously is a very stiff part of the vehicle. Therefore, it is advantageous to have as the rigid strip, the central strip F1. According to the variant of Figure 1, the lateral strips F3a and F3b are completely irrelevant, so that they could be one with the intermediate strips F2a and F2b, presenting reduced mechanical strengths to frontal impacts. According to a favourite variant not shown, the first connection point of the seat support S is connected to one of the lateral strips F3a and F3b, while the second connection point of the seat support S is connected to one of the intermediate strips. This will make it possible to achieve a rotation opposite to that shown in Figure 2.

In this case, it is the central strip F1 which is optional, as it can be in one piece with the intermediate strips F1a and F1b with reduced mechanical strengths to frontal impacts.

While from a certain point of view this variant makes it possible to rotate the seat inwards with even more space, from another point of view it is more difficult to ensure the same stiffness of the lateral strips F3a and F3b and the central strip F1 which, in the event of a frontal impact cooperates with the underlying engine.

However, the intermediate strips F1a and F1b may protrude further forward than the lateral strips F3a and F3b, so as to be the first to suffer the effects of a frontal impact. According to a preferred variant of the invention, when the floor is made using a reticulate structure one or more of the longitudinal rods La are fragile in that they have a reduced compressive strength, facilitating the sliding rearwards of the intermediate strips F2a and F2b. Preferably, such longitudinal reduced compressive rods La are placed on an opposite side, i.e. rear, of the floor from the front part of the vehicle cab comprising the floor F.

One or more of the transversal rods which define the intermediate strips may be made so as to have a reduced flexural strength compared to the remaining similar rods. Preferably, the central strip F1 and/or lateral strips F3a, F3b are strengthened with high-strength steel plates or aluminium.

Embodiment variants may be made to the non-limiting example described, while remaining within the scope of protection of the present invention, comprising all the equivalent embodiments for a person skilled in the art.

From the above description a person skilled in the art may make the object of the invention without introducing any further construction details. The description in the chapter related to the state of the art is merely for a better understanding of the invention and is not a statement of the existence of what is described.

Furthermore, unless specifically excluded in the detailed description, the contents of the chapter on the state of the art may be considered in combination with the characteristics of the present invention, forming an integral part of the present invention. None of the characteristics of the different variants is essential, except as indicated in the independent claims, therefore, the individual characteristics of each preferred variant or drawing may be individually combined with the other variants described.

## Claims

1. Anchoring system for a seat (S) of an industrial or commercial vehicle, the vehicle comprising a vehicle cab provided with a related floor (F), the floor being formed by contiguous longitudinal strips having different mechanical strengths to frontal impacts of the vehicle cab, wherein a first strip (F1, F3a, F3b) has a greater mechanical strength, and a second strip (F2a, F2b) has decreased mechanical strength with respect to said first strip, the seat (S) being anchored to the floor (F) in two points (N1, N2), of which a first point is connected to said first strip (F1, F3a, F3b) and a second point (N2) is connected to said second strip (F2a, F2b), so that, in case of frontal impact, said second strip is adapted to slide longitudinally with respect to said first strip causing a rotation of said seat about said first anchor point (N1).

2. Anchoring system according to claim 1, wherein said floor (F) is made by means of a reticulate structure formed by longitudinal (L) and transverse (T) rods, with respect to a longitudinal extension of the vehicle (X), mutually connected in respective nodes (N, N1, N2) and wherein said second strip (F2a, F2b), with decreased mechanical strength, comprises one or more rods (La) with decreased compressive strength adapted to facilitate a backward sliding of said second strip.

3. System according to claim 2, wherein said rods with decreased compressive strength (La) are positioned at the rear, i.e. in opposite position with respect to a frontal part of the vehicle cab.

4. System according to one of claims 2 or 3, wherein one or more of said transverse rods (T) have decreased mechanical bending strength with respect to the remaining transverse rods.

5. System according to any one of the preceding claims 1 to 4, wherein said floor (F) has an arrangement of said first and second strips symmetrical with respect to a longitudinal extension axis of the vehicle (X).

6. System according to any one of the preceding claims 1 to 5, wherein said first strip (F1) is arranged in medial position with respect to a transverse extension (Y) of the floor (F).

7. System according to any one of the preceding claims 1 to 5, wherein said first strip (F3a/F3b) is arranged in lateral position with respect to a transverse extension (Y) of the floor (F).

8. Industrial or commercial vehicle comprising a vehicle cab provided with a related floor (F) and provided with an anchoring system for a seat (S) according to any one of claims 1 to 7.

## Patentansprüche

1. Verankerungssystem für einen Sitz (S) eines Industrie- oder Nutzfahrzeugs, welches Fahrzeug eine Fahrzeugkabine umfasst, die mit einem entsprechenden Boden (F) versehen ist, welcher Boden gebildet wird durch benachbarte Längs streifen, die unterschiedliche mechanische Stärken gegen frontale Stöße der Fahrzeugkabine aufweisen, wobei ein erster Streifen (F1, F3a, F3e) eine größere mechanische Stärke aufweist und ein zweiter Streifen (F2a, F2b) eine verminderte mechanische Stärke bezüglich des ersten Streifens aufweist, und der Sitz (S) an den Boden (F) an zwei Punkten (N1, N2) verankert ist, von denen ein erster Punkt mit dem ersten Streifen (F1, F3a, F3b) und ein zweiter Punkt (N2) mit dem zweiten Streifen (F2a, F2b) verbunden ist, derart, dass im Fall eines Frontalstoßes der zweite Streifen dazu vorgesehen ist, in Längsrichtung bezüglich des ersten Streifens zu gleiten, was eine Rotation des Sitzes um den ersten Ankerpunkt (N1) verursacht.

2. Verankerungssystem gemäß Anspruch 1, bei welchem der Boden (F) aus einer Netzstruktur gebildet ist, die durch Längsstäbe (L) und Querstäbe (T) bezüglich einer Längserstreckung des Fahrzeugs (X) gebildet wird, welche durch einen entsprechenden Knotenpunkt (N, N1, N2) miteinander verbunden sind, und wobei der zweite Streifen (F2a, F2b) mit verminderter mechanischer Stärke einen oder mehrere Stäbe (La) mit verminderter Kompressionsstärke umfasst, die dazu vorgesehen sind, ein Rückwärtsgleiten des zweiten Streifens zu erleichtern.

3. System gemäß Anspruch 2, bei welchem die Stäbe mit verminderter Kompressionsstärke (La) im hinteren Teil, d. h. gegenüberliegend einem frontalen Teil der Fahrzeugkabine angeordnet sind.

4. System gemäß einem der Ansprüche 2 oder 3, bei welchem einer oder mehrere der Querstäbe (T) eine verminderte mechanische Liegestärke bezüglich der verbleibenden Querstäbe aufweisen.

5. System gemäß einem der vorhergehenden Ansprüche 1 bis 4, bei welchem der Boden (F) eine Anordnung erster und zweiter Streifen aufweist, die symmetrisch bezüglich einer Längserstreckungsachse des Fahrzeugs (X) sind.

6. System gemäß einem der vorhergehenden Ansprüche 1 bis 5, bei welchem der erste Streifen (F1) in einer mittleren Position bezüglich einer Quererstreckung (Y) des Bodens (F) angeordnet ist.

7. System gemäß einem der vorhergehenden Ansprüche 1 bis 5, bei welchem der erste Streifen (F3a/F3b) in einer seitlichen Position bezüglich einer Quererstreckung (Y) des Bodens (F) angeordnet ist.

8. Industrie- oder Nutzfahrzeug, umfassend eine Fahrzeugkabine mit einem entsprechenden Boden (F), und ausgestattet mit einem Verankerungssystem für einen Sitz (S) gemäß einem der Ansprüche 1 bis 7.

## Revendications

1. Système d'ancrage pour un siège (S) d'un véhicule industriel ou commercial, le véhicule comprenant une cabine de véhicule prévue avec un plancher (F) relatif, le plancher étant formé par des bandes longitudinales contigües ayant des résistances mécaniques différentes aux chocs frontaux de la cabine de véhicule, dans lequel une première bande (F1, F3a, F3b) a une résistance mécanique plus importante, et une seconde bande (F2a, F2b) a une résistance mécanique réduite par rapport à ladite première bande, le siège (S) étant ancré au plancher (F) en deux points (N1, N2), dont un premier point est raccordé à ladite première bande (F1, F3a, F3b) et un second point (N2) est raccordé à ladite seconde bande (F2a, F2b), de sorte que, en cas de choc frontal, ladite seconde bande est adaptée pour coulisser longitudinalement par rapport à ladite première bande provoquant une rotation dudit siège autour dudit premier point d'ancrage (N1).

2. Système d'ancrage selon la revendication 1, dans lequel ledit plancher (F) est réalisé au moyen d'une structure réticulée formée par des tiges longitudinale (L) et transversale (T), par rapport à une extension longitudinale du véhicule (X), mutuellement raccordées dans des noeuds (N, N1, N2) respectifs et dans lequel ladite seconde bande (F2a, F2b), avec la résistance mécanique réduite, comprend une ou plusieurs tiges (La) avec une résistance à la compression réduite adaptée pour faciliter un coulissement vers l'arrière de ladite seconde bande.

3. Système selon la revendication 2, dans lequel lesdites tiges avec la résistance à la compression réduite (La) sont positionnées à l'arrière, c'est-à-dire dans une direction opposée par rapport à une partie frontale de la cabine de véhicule.

4. Système selon l'une des revendications 2 ou 3, dans lequel une ou plusieurs desdites tiges transversales (T) ont une résistance mécanique à la flexion réduite par rapport aux tiges transversales résiduelles.

5. Système selon l'une quelconque des revendications 1 à 4, dans lequel ledit plancher (F) a un agencement desdites première et seconde bandes symétriques par rapport à un axe d'extension longitudinal du véhicule (X).

6. Système selon l'une quelconque des revendications 1 à 5, dans lequel ladite première bande (F1) est agencée dans une position médiane par rapport à l'extension transversale (Y) du plancher (F).

7. Système d'ancrage selon l'une quelconque des revendications 1 à 5, dans lequel ladite première bande (F3a/F3b) est agencée dans la position latérale par rapport à une extension transversale (Y) du plancher (F).

8. Véhicule industriel ou commercial comprenant une cabine de véhicule prévue avec un plancher (F) relatif et prévue avec un système d'ancrage pour un siège (S) selon l'une quelconque des revendications 1 à 7.
